# EUROPEAN PATENT APPLICATION

(11) **EP 4 625 057 A1**
(43) Date of publication of application: **01.10.2025**
(21) Application number: 24196603.5
(22) Date of filing: 27.08.2024
(51) Int. Cl.: G03G 15/00, G06N 3/047, H04N 1/00

(54) **IMAGE FORMING APPARATUS**

(30) Priority: 27.03.2024 JP 2024051361
(71) Applicant: FUJIFILM Business Innovation Corp., Minato-ku Tokyo (JP)
(72) Inventor: SUGI, Shinsuke, Yokohama-shi, Kanagawa (JP); UDAKA, Tsutomu, Yokohama-shi, Kanagawa (JP); AKIYAMA, Minoru, Yokohama-shi, Kanagawa (JP)
(74) Representative: Kurig, Thomas

(57) **Abstract**

An image forming apparatus includes: an image forming unit that forms an image on a recording medium; plural sound detection units that detect a sound of the image forming unit; and a specifying unit that specifies an abnormality of the image forming unit based on information output from the plural sound detection units, in which the specifying unit is provided in a number less than the number of plural sound detection units.

## Description

### BACKGROUND OF THE INVENTION

### (i) Field of the Invention

The present invention relates to an image forming apparatus.

### (ii) Description of Related Art

JP6740247B discloses an abnormality detection system that is operable to execute inferring a latent variable from input data of an abnormality detection target based on an encoder of a VAE trained in advance with training data including normal data, generating restored data from the latent variable based on a decoder of the VAE trained in advance, and determining whether the input data is normal or abnormal based on the input data and the restored data.

JP2006-184722A discloses a process including a plurality of acoustic sensors that detect an operation sound of an apparatus to discriminate an abnormal state of the apparatus and a timing of the abnormal state by comparing an operation sound of the apparatus collected in advance with a newly collected operation sound.

### SUMMARY OF THE INVENTION

In a case where a sound detection unit is provided in an image forming apparatus, and a function unit for specifying an abnormality of the image forming apparatus is provided in a manner corresponding to the sound detection unit, the abnormality of the image forming apparatus can be specified.

Here, in a case where the function unit for specifying the abnormality is provided in a manner corresponding to each of a plurality of sound detection units, the abnormality is specified individually for each function unit.

An object of the present invention is to reduce hardware required for specifying an abnormality, as compared with a case where a function unit for specifying the abnormality is individually provided in a manner corresponding to each of a plurality of sound detection units.

According to a first aspect of the present invention, there is provided an image forming apparatus including: an image forming unit that forms an image on a recording medium; a plurality of sound detection units that detect a sound of the image forming unit; and a specifying unit that specifies an abnormality of the image forming unit based on information output from the plurality of sound detection units, in which the specifying unit is provided in a number less than the number of plurality of sound detection units.

According to a second aspect of the present invention, the image forming apparatus according to the first aspect, may further includes: a transmission section that transmits information indicating that the abnormality occurs to an external apparatus in a case where the abnormality is specified by the specifying unit.

According to a third aspect of the present invention, in the image forming apparatus according to the first aspect or the second aspect, the specifying unit may perform machine learning by using an image that is generated based on the information obtained by the sound detection unit and is generated for each sound detection unit, calculate a latent variable from a feature amount extracted from the image by using an abnormality detection model after the machine learning, generate an output image by restoring the image by using the latent variable, and specify the abnormality of the image forming unit by comparing an input image with the output image.

According to a fourth aspect of the present invention, the image forming apparatus according to any one of the first aspect to the third aspect, may further include: a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis, and the specifying unit may specify the abnormality based on the synthetic image generated by the generation section.

According to a fifth aspect of the present invention, in the image forming apparatus according to the fourth aspect, each of the images generated by each of the sound detection units may be an image which has a time axis and a frequency axis and in which an intensity of a sound is represented by a pixel value, and the generation section may generate the synthetic image in which each of the images is arranged in a manner in which the time axis of each of the plurality of images extends along specific one direction.

According to a sixth aspect of the present invention, in the image forming apparatus according to the fifth aspect, in a case of generating the synthetic image by synthesizing the images based on the plurality of images, the generation section may generate the synthetic image in which each of the images is arranged in a manner in which the time axis of each of the plurality of images extends along the one direction and in a manner in which the plurality of images are arranged in a direction intersecting with the one direction.

According to a seventh aspect of the present invention, in the image forming apparatus according to the fifth aspect, in a case of generating the synthetic image by synthesizing the images based on the plurality of images, the generation section may generate the synthetic image in which the plurality of images are arranged in a time-synchronized manner.

According to an eighth aspect of the present invention, in the image forming apparatus according to the sixth aspect, the frequency axis of the image may correspond to a magnitude of a frequency component value obtained by analyzing the information obtained by the sound detection unit, each of the images may have a first side along a direction in which the time axis extends and a second side which is along the direction in which the time axis extends and has a position different from the first side in a direction in which the frequency axis extends, one side of the first side and the second side may be a low-frequency side edge located on a low-frequency side and may be disposed on a side in the image at which a low-frequency component value is displayed, and the other side of the first side and the second side may be a high-frequency side edge located on a high-frequency side and may be disposed on a side in the image at which a high-frequency component value is displayed, and in a case of generating the synthetic image by synthesizing the images by using at least one image and another image included in the plurality of images, the generation section may generate a synthetic image in which the high-frequency side edge of the one image is located on the other image side and the high-frequency side edge of the other image is located on the one image side.

According to a ninth aspect of the present invention, in the image forming apparatus according to the eighth aspect, in a case of generating the synthetic image by synthesizing the images by using at least the one image and the other image, the generation section may dispose an intermediate image, which is an image other than the one image and the other image, between the one image and the other image.

According to a tenth aspect of the present invention, in the image forming apparatus according to the ninth aspect, among a plurality of pixels constituting the one image, a density value of the intermediate image may be smaller than a density value of a pixel having a largest density value among a plurality of pixels which are arranged in the one direction and which are in contact with the intermediate image, and the density value of the intermediate image may be larger than a density value of a pixel having a smallest density value among the plurality of pixels arranged in the one direction, and among a plurality of pixels constituting the other image, the density value of the intermediate image may be smaller than a density value of a pixel having a largest density value among a plurality of pixels which are arranged in the one direction and which are in contact with the intermediate image, and the density value of the intermediate image may be larger than a density value of a pixel having a smallest density value among the plurality of pixels arranged in the one direction.

According to an eleventh aspect of the present invention, in the image forming apparatus according to the sixth aspect, the frequency axis of the image may correspond to a magnitude of a frequency component value obtained by analyzing the information obtained by the sound detection unit, each of the images may have a first side along a direction in which the time axis extends and a second side which is along the direction in which the time axis extends and has a position different from the first side in a direction in which the frequency axis extends, one side of the first side and the second side may be a low-frequency side edge located on a low-frequency side and is disposed on a side in the image at which a low-frequency component value is displayed, and the other side of the first side and the second side may be a high-frequency side edge located on a high-frequency side and is disposed on a side in the image at which a high-frequency component value is displayed, and in a case of generating the synthetic image by synthesizing the images by using at least one image and another image included in the plurality of images, the generation section may generate a synthetic image in which the low-frequency side edge of the one image is located on the other image side and the low-frequency side edge of the other image is located on the one image side.

According to a twelfth aspect of the present invention, in the image forming apparatus according to the eleventh aspect, in a case of generating the synthetic image by synthesizing the images by using at least the one image and the other image, the generation section may dispose an intermediate image, which is an image other than the one image and the other image, between the one image and the other image.

According to a thirteenth aspect of the present invention, in the image forming apparatus according to the twelfth aspect, among a plurality of pixels constituting the one image, a density value of the intermediate image may be smaller than a density value of a pixel having a largest density value among a plurality of pixels which are arranged in the one direction and which are in contact with the intermediate image, and the density value of the intermediate image may be larger than a density value of a pixel having a smallest density value among the plurality of pixels arranged in the one direction, and among a plurality of pixels constituting the other image, the density value of the intermediate image may be smaller than a density value of a pixel having a largest density value among a plurality of pixels which are arranged in the one direction and which are in contact with the intermediate image, and the density value of the intermediate image may be larger than a density value of a pixel having a smallest density value among the plurality of pixels arranged in the one direction.

According to a fourteenth aspect of the present invention, there is provided an image forming apparatus including: an image forming unit that forms an image on a recording medium; a plurality of sound detection units that detect a sound of the image forming unit; a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis; and a specifying unit that specifies an abnormality of the image forming unit based on the synthetic image.

With the first aspect of the present invention, it is possible to reduce hardware required for specifying an abnormality, as compared with a case where a function unit for specifying the abnormality is individually provided in a manner corresponding to each of a plurality of sound detection units.

With the second aspect of the present invention, it is possible to reduce the amount of information on the abnormality transmitted to an external apparatus, as compared with a case where the information is transmitted to the external apparatus regardless of the presence or absence of the specified abnormality.

With the third aspect of the present invention, even in a situation in which only a normal sound is basically generated and the abnormal sound is less likely to be generated in the image forming apparatus, it is possible to specify the abnormality generated in the image forming apparatus.

With the fourth aspect of the present invention, it is possible to reduce a load of a process required for specifying the abnormality, as compared with a case where the abnormality is specified for each image obtained for each sound detection unit.

With the fifth aspect of the present invention, it is possible to increase accuracy of specifying the abnormality, as compared with a case where a direction in which a time axis of one image included in a plurality of images extends and a direction in which a time axis of another image extends are different from each other.

With the sixth aspect of the present invention, it is possible to increase the accuracy of specifying the abnormality, as compared with a case where a direction in which a time axis of one image included in a plurality of images extends and a direction in which a time axis of another image extends are different from each other.

With the seventh aspect of the present invention, it is possible to increase the accuracy of specifying the abnormality, as compared with a case where the plurality of images are not arranged in a time-synchronized manner.

With the eighth aspect of the present invention, it is possible to increase the accuracy of specifying the abnormality, as compared with a case where a low-frequency side edge of the one image is located on the other image side and a high-frequency side edge of the other image is located on the one image side.

With the ninth aspect of the present invention, it is possible to increase the accuracy of specifying the abnormality, as compared with a case where the one image and the other image are in direct contact with each other.

With the tenth aspect of the present invention, it is possible to increase the accuracy of specifying the abnormality, as compared with a case where the one image and the other image are in direct contact with each other.

With the eleventh aspect of the present invention, it is possible to increase the accuracy of specifying the abnormality, as compared with a case where the low-frequency side edge of the one image is located on the other image side and the high-frequency side edge of the other image is located on the one image side.

With the twelfth aspect of the present invention, it is possible to increase the accuracy of specifying the abnormality, as compared with a case where the one image and the other image are in direct contact with each other.

With the thirteenth aspect of the present invention, it is possible to increase the accuracy of specifying the abnormality, as compared with a case where the one image and the other image are in direct contact with each other.

With the fourteenth aspect of the present invention, it is possible to reduce the hardware required for specifying the abnormality, as compared with a case where the abnormality is specified without generating the synthetic image.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram describing an image forming apparatus;
Fig. 3 is a diagram illustrating a configuration example of hardware of a specifying device;
Fig. 4 is a diagram describing a process performed by the specifying device;
Fig. 5 is a diagram illustrating a sound-corresponding image generated by a corresponding image generation unit;
Fig. 6 is a diagram describing a process of generating a synthetic image by a synthetic image generation unit;
Figs. 7A and 7B are diagrams describing a synchronization between the sound-corresponding images;
Fig. 8 is a diagram illustrating another example of the process of generating the synthetic image;
Fig. 9 is a diagram illustrating still another process example;
Fig. 10 is an enlarged view of a portion indicated by a reference numeral X in Fig. 9;
Fig. 11 is a diagram illustrating still another example of the process of generating the synthetic image;
Fig. 12 is a diagram illustrating still another process example;
Fig. 13 is an enlarged view of a portion indicated by a reference numeral XIII in Fig. 12; and
Fig. 14 is a diagram illustrating another example of the synthetic image.

### DETAILED DESCRIPTION OF THE INVENTION

Hereinafter, an exemplary embodiment of the present disclosure will be described with reference to the accompanying drawings.

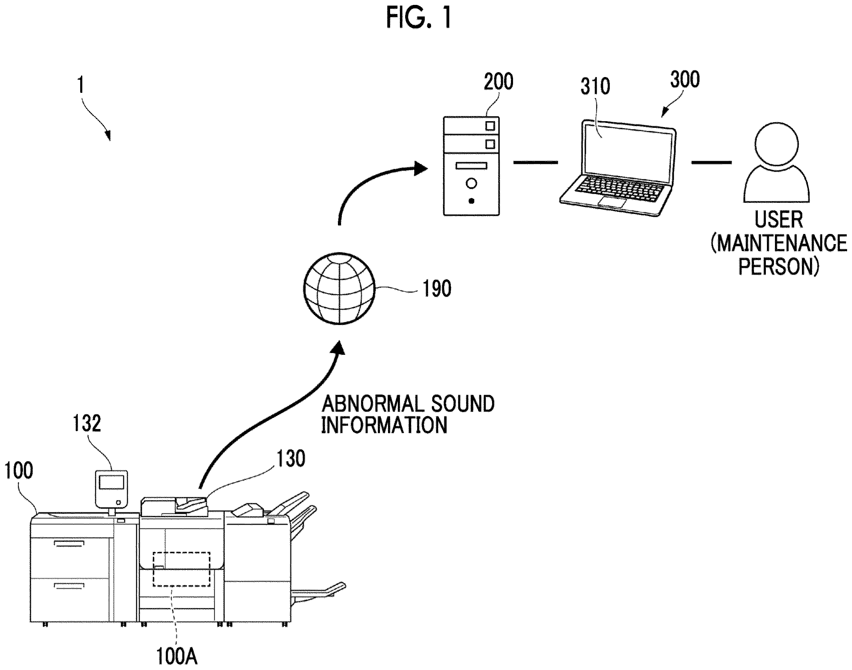

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 190.

In Fig. 1, one image forming apparatuses 100 among the plurality of image forming apparatuses 100 is displayed.

In the present exemplary embodiment, this server apparatus 200 as an example of an information processing system acquires information on each of the image forming apparatuses 100.

The diagnosis system 1 further includes a user terminal 300. The user terminal 300 is connected to the server apparatus 200. The user terminal 300 receives an operation from a user. Examples of the user include a maintenance person of the image forming apparatus 100. In the present exemplary embodiment, the user terminal 300 referred to by the maintenance person is provided.

The user terminal 300 is provided with a display device 310. The user terminal 300 is realized by a computer. Examples of a form of the user terminal 300 include a personal computer (PC), a smartphone, and a tablet terminal.

The image forming apparatus 100 is provided with an image forming unit 100A that forms an image on paper which is an example of a recording medium.

Further, in Fig. 1, although not illustrated, the image forming apparatus 100 is provided with a sound sensor or the like.

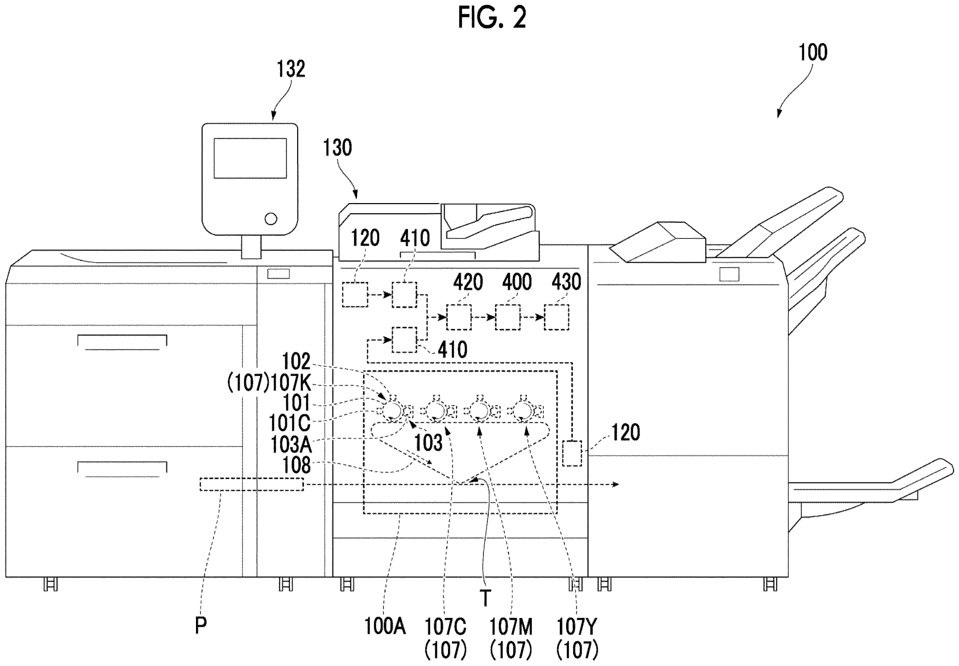

Fig. 2 is a diagram describing the image forming apparatus 100.

In the present exemplary embodiment, as described above, the image forming apparatus 100 is provided with the image forming unit 100A that forms an image on paper P which is an example of a recording medium. An electrophotographic method is used for the image formation by the image forming unit 100A.

The image forming unit 100A, as an example of an image forming section, is provided with an intermediate transfer belt 108, which is a member that moves in a circumferential direction, and a plurality of image forming units 107 that form images of different colors.

In the present exemplary embodiment, the image formed by each of the plurality of image forming units 107 is temporarily transferred to the intermediate transfer belt 108, and then transferred to the paper P.

The plurality of image forming units 107 form the images of colors different from each other on the intermediate transfer belt 108. The intermediate transfer belt 108 may not be provided. A configuration in which the image is directly transferred to the paper P from each of the plurality of image forming units 107 may be provided.

In addition, the plurality of image forming units 107 may not be provided. A configuration may be adopted in which only one image forming unit 107 is provided. In a case of the configuration in which only one image forming unit 107 is provided, the intermediate transfer belt 108 is omitted.

In the present exemplary embodiment, an image forming unit 107Y that forms an image of Yellow is provided as the image forming unit 107. Further, an image forming unit 107M that forms an image of Magenta is provided. Further, an image forming unit 107C that forms an image of Cyan is provided. Further, an image forming unit 107K that forms an image of Black is provided.

The image formed by each of the image forming units 107 is transferred to the intermediate transfer belt 108 as an example of a transfer member.

Thereafter, at a transfer unit T, this image is transferred to the paper P, which is transported to the transfer unit T. Therefore, an image is formed on the paper P.

A photosensitive drum 101 as an example of an image holding body is provided in each of the image forming units 107. The photosensitive drum 101 is rotated in a clockwise direction.

Further, a charging device 101C that performs charging on the photosensitive drum 101 is provided in each of the image forming units 107. An exposure device 102 that performs exposure on the photosensitive drum 101 is provided in each of the image forming units 107.

Further, a developing device 103 is provided in each of the image forming unit 107. The developing device 103 performs development on an electrostatic latent image formed on the photosensitive drum 101 by the exposure device 102.

The developing device 103 is provided with a developing roll 103A disposed at a position facing the photosensitive drum 101. In the present exemplary embodiment, a developer adhering to an outer peripheral surface of the developing roll 103A moves to a surface of the photosensitive drum 101. Therefore, the development is performed.

In a case where the development is performed, an image by, for example, a toner is formed on the photosensitive drum 101. Thereafter, this image is transferred to an outer circumferential surface of the intermediate transfer belt 108. Thereafter, the image on the intermediate transfer belt 108 is transferred to the paper P, and the image is formed on the paper P.

The formation of the image on the paper P by the image forming unit 100A is not limited to the electrophotographic method, and other methods such as an inkjet method may be used.

The image forming apparatus 100 is further provided with an image scanning device 130.

This image scanning device 130 as an example of an image scanning section is a so-called scanner that scans an image formed on paper (not illustrated) as an example of a recording medium.

The image scanning device 130 includes a light source that emits light with which paper is to be irradiated and a light receiving unit such as a CCD that receives reflected light from the paper. In the present exemplary embodiment, scan image data of the paper is generated based on the reflected light received by the light receiving unit.

Further, an operation reception unit 132 that receives an operation from a user who uses the image forming apparatus 100 is provided in each of the image forming apparatuses 100.

The operation reception unit 132 is configured with a so-called touch panel. The operation reception unit 132 displays information to the user, and receives the operation performed by the user.

The display of the information to the user and the reception of the operation of the user are not limited to being performed by one operation reception unit 132, and the operation reception unit 132 and an information display unit may be individually provided.

Further, each of the image forming apparatuses 100 is provided with a sound sensor 120 as an example of a detection unit that detects a sound of the image forming unit 100A. The sound sensor 120 can also be called a microphone.

In the present exemplary embodiment, a plurality of sound sensors 120 are provided in each of the image forming apparatuses 100. In the example illustrated in Fig. 2, two sound sensors 120 are provided in the image forming apparatus 100.

Further, in the present exemplary embodiment, a specifying device 400 as an example of a specifying unit that specifies an abnormality of the image forming unit 100A is provided based on information output from the sound sensor 120.

In the present exemplary embodiment, the specifying device 400 is provided in a number less than the number of plurality of sound sensors 120. Specifically, in the present exemplary embodiment, one specifying device 400 is provided.

The specifying device 400 specifies the abnormality of the image forming unit 100A based on the information output from the plurality of sound sensors 120. The specifying device 400 specifies an abnormal sound generated by the image forming apparatus 100, and specifies an abnormality of the image forming unit 100A based on the abnormal sound. Here, the "abnormal sound" refers to a sound generated due to a failure of the image forming apparatus 100.

Further, a corresponding image generation unit 410 is provided in a manner corresponding to each of the sound sensors 120.

Each of the corresponding image generation units 410 visualizes information output from the sound sensor 120, and generates an image based on the information output from the sound sensor 120. In other words, each of the corresponding image generation units 410 generates an image representing a sound obtained by the sound sensor 120.

Hereinafter, in the present specification, the image generated by the corresponding image generation unit 410 is referred to as a "sound-corresponding image."

The corresponding image generation unit 410 is provided in a manner corresponding to each of the sound sensors 120. Two corresponding image generation units 410 are provided.

In the present exemplary embodiment, the corresponding image generation unit 410 is provided for each sound sensor 120, and a sound-corresponding image is generated for each sound sensor 120.

Further, in the present exemplary embodiment, a synthetic image generation unit 420 that generates a synthetic image is provided.

The synthetic image generation unit 420, as an example of a generation section, generates a synthetic image (details will be described below) by synthesizing images based on a plurality of generated sound-corresponding images.

In the present exemplary embodiment, the synthetic image generation unit 420 generates the number of synthetic images, which is less than the number of sound-corresponding images.

In the present exemplary embodiment, the corresponding image generation unit 410 and the synthetic image generation unit 420 are realized by, for example, a computer (not illustrated).

More specifically, the corresponding image generation unit 410 and the synthetic image generation unit 420 are realized by a CPU (not illustrated) as an example of a processor executing a program related to an image process stored in a ROM or the like.

In a case where the synthetic image is generated by the synthetic image generation unit 420, the synthetic image is input to the specifying device 400.

In addition, in the present exemplary embodiment, the analysis of the generated synthetic image is performed by the specifying device 400 as an example of a specifying section. In a case where an abnormal sound is generated in the image forming apparatus 100, the abnormal sound is specified by the specifying device 400.

In the present exemplary embodiment, the specifying device 400 specifies the abnormal sound generated by the image forming apparatus 100. In this case, the specifying device 400 specifies an abnormality of the image forming unit 100A.

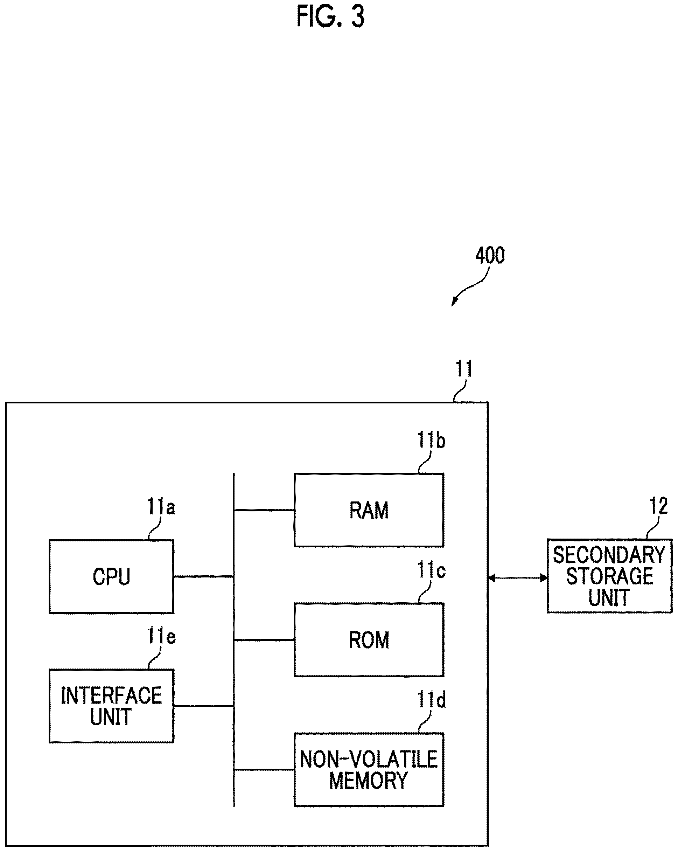

Fig. 3 is a diagram illustrating a configuration example of hardware of the specifying device 400.

The specifying device 400 is realized by a computer. The specifying device 400 includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case where power supply is interrupted and an interface unit 11e that controls each unit, such as a communication unit, connected to the arithmetic processing unit 11.

The non-volatile memory 11d is configured with, for example, an SRAM or a flash memory that is backed up by a battery. The secondary storage unit 12 stores the programs executed by the arithmetic processing unit 11 in addition to files and the like.

In the present exemplary embodiment, the CPU 11a reads the program stored in the ROM 11c or the secondary storage unit 12 to execute each process.

Here, a program executed by the CPU 11a may be provided to the specifying device 400, in a state of being stored in a computer-readable recording medium such as a magnetic recording medium (a magnetic tape, a magnetic disk, or the like), an optical recording medium (an optical disk or the like), a magnetooptical recording medium, or a semiconductor memory. In addition, the program executed by the CPU 11a may be provided to the specifying device 400 by a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the present exemplary embodiment, the specifying device 400 (see Fig. 2) specifies an abnormal sound by using an autoencoder. The autoencoder is trained as unsupervised learning by using the same data for an input layer and an output layer.

The specifying device 400 specifies an abnormal sound by using the sound-corresponding image generated based on the information obtained by the sound sensor 120 and the autoencoder.

More specifically, the specifying device 400 specifies an abnormal sound by using the synthetic image generated by the synthetic image generation unit 420 based on the two sound-corresponding images and the autoencoder.

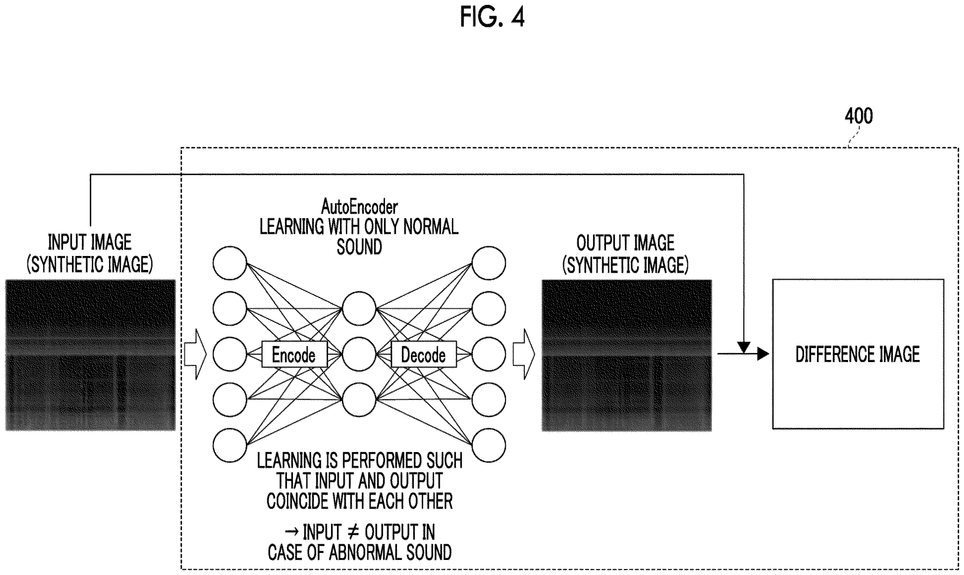

Fig. 4 is a diagram describing a process performed by the specifying device 400.

As described above, the specifying device 400 specifies an abnormal sound by using an autoencoder.

In the present exemplary embodiment, as illustrated in Fig. 4, a synthetic image generated by the synthetic image generation unit 420 (see Fig. 2) is input to the specifying device 400.

A sound that is usually generated by the image forming apparatus 100 is basically a normal sound.

In the present exemplary embodiment, a synthetic image generated based on the normal sound is usually input to the specifying device 400.

In this specifying device 400 using the autoencoder, learning is performed by using the synthetic image generated based on the normal sound. In other words, in the present exemplary embodiment, basically, the autoencoder is trained by training data consisting of the synthetic image generated based on the normal sound.

In the specifying device 400 according to the present exemplary embodiment, basically, learning is performed such that the input synthetic image and an output synthetic image coincide with each other.

In this case, no difference is generated between the synthetic image before being input to the specifying device 400 and the synthetic image output from the specifying device 400.

Hereinafter, in the present specification, the synthetic image before being input to the specifying device 400 is referred to as an "input image", and the synthetic image output from the specifying device 400 is referred to as an "output image".

In the present exemplary embodiment, in order to specify an abnormal sound, the specifying device 400 generates a difference image based on the input image and the output image.

More specifically, the specifying device 400 generates, for example, a difference image representing a difference between the input image and the output image by performing a process of subtracting a pixel value of a pixel constituting the output image from a pixel value of a pixel constituting the input image, for each pixel.

In the present exemplary embodiment, each of the input image and the output image is an image in which an intensity of a sound is represented by a pixel value. In the present exemplary embodiment, the specifying device 400 generates, for example, a difference image representing a difference between the input image and the output image by performing a process of subtracting a pixel value of a pixel constituting the output image from a pixel value of a pixel constituting the input image, for each pixel.

In this case, in a case where the input image input to the specifying device 400 is an input image generated based on a normal sound, an image distortion and the like do not occur in the difference image.

On the other hand, in a case where a synthetic image generated based on a rarely generated abnormal sound is input to the specifying device 400, an image distortion due to this abnormal sound occurs in the difference image. In other words, in a case where the synthetic image generated based on the rarely generated abnormal sound is input to the specifying device 400, an image that does not appear in a case of the normal sound appears in the difference image.

In this case, the specifying device 400 specifies that the abnormal sound is generated in the image forming apparatus 100. In this case, information indicating that the abnormal sound is generated is output from the specifying device 400.

The specifying device 400 specifies the abnormal sound generated by the image forming apparatus 100 based on the image appearing in the difference image.

In the present exemplary embodiment, the specifying device 400 performs machine learning by using an image, which is generated based on the information obtained from the sound sensor 120 and is generated for each sound sensor 120. The specifying device 400 calculates a latent variable from a feature amount extracted from the image by using an abnormality detection model after the machine learning, and generates an output image by restoring the image by using the latent variable. The specifying device 400 compares the input image with the output image to specify an abnormal sound generated in the image forming apparatus 100. In other words, the specifying device 400 specifies an abnormality of the image forming unit 100A by comparing the input image with the output image.

In a case where the information indicating that the abnormal sound is generated is output from the specifying device 400, this information is transmitted to the server apparatus 200 (see Fig. 1), which is an example of an external apparatus.

Although not described above, in the present exemplary embodiment, as illustrated in Fig. 2, the transmission unit 430, as an example of a transmission section that transmits the information indicating that the abnormal sound is generated to the server apparatus 200, is provided.

In a case where the abnormal sound is specified by the specifying device 400, the transmission unit 430 transmits the information indicating that the abnormal sound is generated to the server apparatus 200.

The transmission unit 430 is configured with a computer (not illustrated) and a known transmission device (not illustrated) for information transmission.

The computer includes a CPU (not illustrated) as an example of a processor. In the transmission unit 430, the transmission device is operated in response to instructions from this CPU.

In a case where an abnormal sound is specified by the specifying device 400, the transmission unit 430 transmits information indicating that the abnormal sound is generated to the server apparatus 200.

In the present exemplary embodiment, in a case where the information indicating that the abnormal sound is generated is output from the specifying device 400, information indicating that an abnormality of the image forming unit 100A is specified is also output from the specifying device 400. In the present exemplary embodiment, the information indicating that the abnormality in the image forming unit 100A is specified is also transmitted to the server apparatus 200.

In the present exemplary embodiment, the difference images sequentially generated by the specifying device 400 are not transmitted to the server apparatus 200. In addition, information indicating that an abnormal sound is not generated is not transmitted to the server apparatus 200.

In the present exemplary embodiment, only in a case where an abnormal sound is specified by the specifying device 400, the information indicating that the abnormal sound is generated is transmitted to the server apparatus 200.

In addition, in this case, other information may be transmitted to the server apparatus 200, in addition to the information indicating that the abnormal sound is generated. For example, a content of the analysis by the specifying device 400 may be transmitted to the server apparatus 200.

In the present exemplary embodiment, the information indicating that the abnormality of the image forming unit 100A is specified is transmitted to the server apparatus 200 only in a case where the abnormal sound is specified by the specifying device 400.

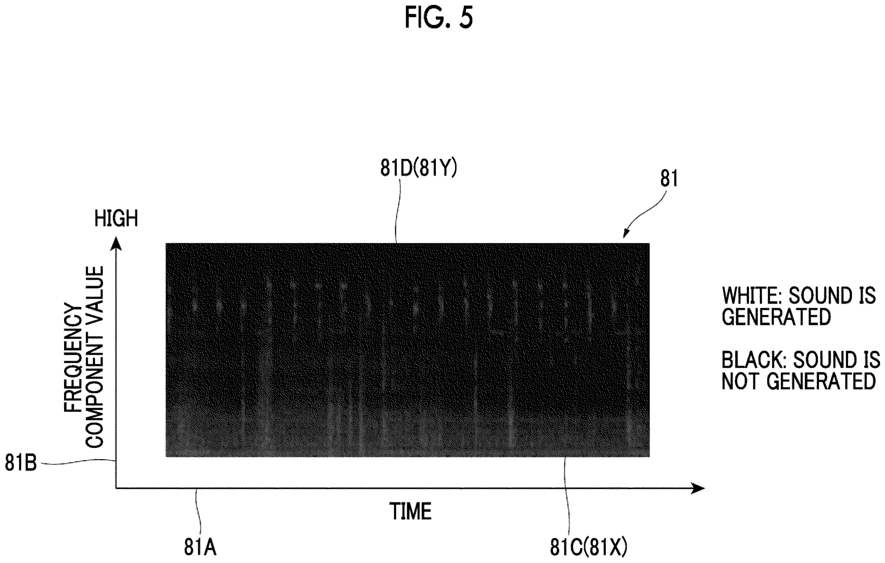

Fig. 5 is a diagram illustrating a sound-corresponding image generated by the corresponding image generation unit 410.

The corresponding image generation unit 410 (see Fig. 2) performs a short-time Fourier transform (STFT) process on information obtained from the sound sensor 120. In other words, the corresponding image generation unit 410 performs the short-time Fourier transform process on the information obtained from the sound sensor 120.

Therefore, a sound-corresponding image 81 illustrated in Fig. 5 is generated.

The sound-corresponding image 81 illustrated in Fig. 5 has a horizontal axis 81A and a vertical axis 81B, which are two axes in a relationship orthogonal to each other.

In the sound-corresponding image 81, the horizontal axis 81A is a time axis, and the vertical axis 81B is an axis corresponding to a magnitude of a frequency component value. The vertical axis 81B can also be referred to as a frequency axis.

In the present exemplary embodiment, the sound-corresponding image 81 is an image which has a time axis and a frequency axis and in which an intensity of a sound is represented by a pixel value.

In the sound-corresponding image 81, a frequency component value corresponding to a high frequency is displayed on a side away from the time axis, and a frequency component value corresponding to a low frequency is displayed on a side close to the time axis.

A white portion in the sound-corresponding image 81 indicates that a sound is generated. In addition, a black portion in the sound-corresponding image 81 indicates that no sound is generated.

The vertical axis 81B of the sound-corresponding image 81 corresponds to a magnitude of a frequency component value obtained by analyzing information obtained by the sound sensor 120.

Each sound-corresponding image 81 has a first side 81C along a direction in which the horizontal axis 81A, which is a time axis, extends. In addition, each sound-corresponding image 81 has a second side 81D along a direction in which the horizontal axis 81A, which is the time axis, extends.

A position of the first side 81C and a position of the second side 81D are different from each other in a direction in which the vertical axis 81B extends.

In the present exemplary embodiment, the first side 81C, which is one side of the first side 81C and the second side 81D, is a low-frequency side edge 81X located on a low-frequency side. The low-frequency side edge 81X is disposed on a side at which a low-frequency component value is displayed, in the sound-corresponding image 81.

Further, the second side 81D, which is the other side of the first side 81C and the second side 81D, is a high-frequency side edge 81Y located on a high-frequency side. The high-frequency side edge 81Y is disposed on a side at which a high-frequency component value is displayed, in the sound-corresponding image 81.

In the present exemplary embodiment, as described above, the plurality of sound sensors 120 (see Fig. 2) are provided. In this case, a mode in which the specifying device 400 is provided for each sound sensor 120 is also considered.

Meanwhile, in this case, the number of specifying devices 400 tends to be increased and a cost tends to be increased in accordance with the number of sound sensors 120.

In addition, in a case where the specifying device 400 is provided for each sound sensor 120, a load of the process on the entire image forming apparatus 100 is increased.

On the other hand, in the present exemplary embodiment, the number of installations of the specifying device 400 is less than the number of installations of the sound sensor 120. In this case, an increase in cost due to an increase in the number of specifying devices 400 can be prevented.

In addition, in this case, the processing load of the entire image forming apparatus 100 is reduced. In a case where the number of installations of the specifying devices 400 is less than the number of installations of the sound sensors 120, an implementation scale of a circuit to be mounted on the image forming apparatus 100 is reduced.

In the present exemplary embodiment, in this manner, the number of installations of the specifying devices 400 is less than the number of installations of the sound sensors 120.

In the present exemplary embodiment, in order to reduce the number of installations of the specifying device 400, the number of synthetic images is generated to be less than the total number of sound sensors 120 based on the sound-corresponding image 81 generated for each sound sensor 120.

The synthetic image is input to the specifying device 400. The specifying device 400 analyzes the synthetic image to specify an abnormal sound.

The synthetic image generation unit 420 (see Fig. 2) as an example of a generation section performs image synthesis based on a plurality of sound-corresponding images 81 generated by a plurality of corresponding image generation units 410 to generate a synthetic image, which is an image obtained by this synthesis.

In the present exemplary embodiment, the sound-corresponding image 81 is generated based on the information obtained by the sound sensor 120 for each sound sensor 120, as described above.

The synthetic image generation unit 420 performs image synthesis based on the plurality of sound-corresponding images 81 generated in correspondence with each of the plurality of sound sensors 120, the sound-corresponding image 81 being generated by the corresponding image generation unit 410.

Therefore, a synthetic image, which is an image obtained by synthesizing the sound-corresponding images 81, is generated.

In the present exemplary embodiment, the synthetic images in a number less than the total number of sound sensors 120 are obtained. Further, in the present exemplary embodiment, the specifying device 400 specifies an abnormal sound by using an autoencoder based on the generated synthetic image.

In the present exemplary embodiment, a maintenance person of the image forming apparatus 100 (see Fig. 1) accesses the server apparatus 200 via the user terminal 300, and refers to information on the abnormal sound stored in the server apparatus 200.

In the present exemplary embodiment, in a case where an abnormal sound is specified by the specifying device 400, information indicating that the abnormal sound is generated by the image forming apparatus 100 is stored in the server apparatus 200.

In a case where the information indicating that the abnormal sound is generated in the image forming apparatus 100 is stored in the server apparatus 200, the maintenance person of the image forming apparatus 100 performs an action for the image forming apparatus 100, such as replacement of a component.

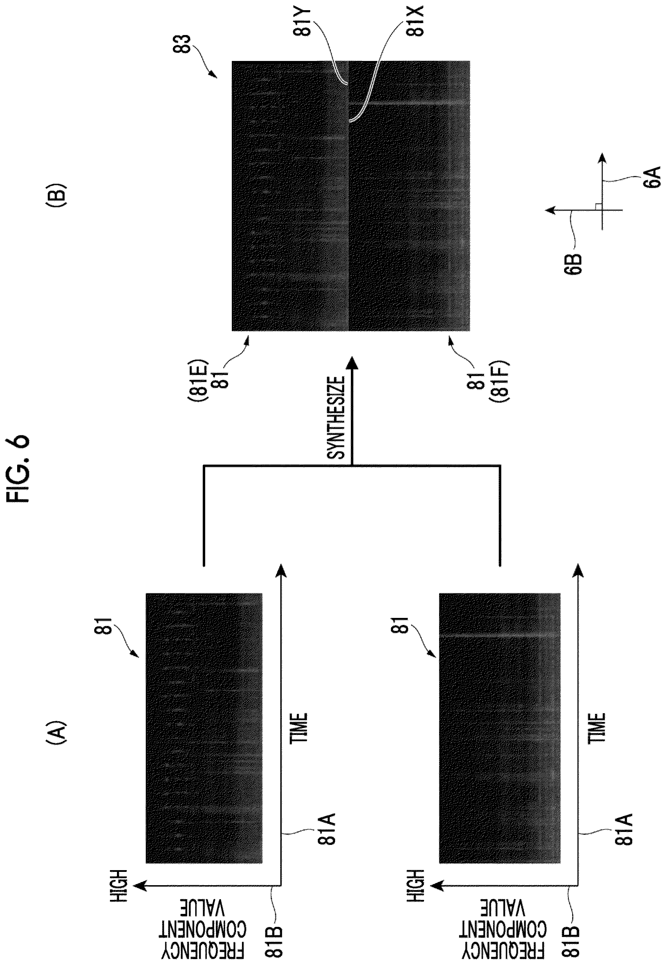

Fig. 6 is a diagram describing a process of generating a synthetic image by the synthetic image generation unit 420.

A part (A) in Fig. 6 illustrates each sound-corresponding image 81 before the synthesis is performed, and a part (B) in Fig. 6 illustrates a synthetic image 83.

As illustrated in the part (B) in Fig. 6, the synthetic image generation unit 420 generates the synthetic image 83 in which each of the sound-corresponding images 81 is arranged in a manner in which the horizontal axis 81A of each of the plurality of sound-corresponding images 81 extends along specific one direction 6A (not illustrated in the part (B) in Fig. 6).

In the present exemplary embodiment, as illustrated in Fig. 5, each of the sound-corresponding images 81 generated for each sound sensor 120 has the horizontal axis 81A as a time axis and the vertical axis 81B corresponding to a magnitude of a frequency component value obtained for each specific time.

In the generating of the synthetic image 83, the synthetic image generation unit 420 arranges each of the sound-corresponding images 81 in a manner in which the horizontal axis 81A extends along the specific one direction 6A as illustrated in the part (B) in Fig. 6.

In the example illustrated in Fig. 6, the "one direction 6A" is a direction from a left side to a right side in Fig. 6.

In the part (B) in Fig. 6, the plurality of sound-corresponding images 81 are arranged side by side in an intersecting direction 6B, which is a direction intersecting with the one direction 6A. More specifically, the plurality of sound-corresponding images 81 are arranged in a direction orthogonal to the one direction 6A.

The synthetic image generation unit 420 generates the synthetic image 83 such that each of the sound-corresponding images 81 is arranged in a manner in which the horizontal axis 81A of each of the sound-corresponding images 81 extends along the one direction 6A, and in a manner in which the plurality of sound-corresponding images 81 are arranged in the intersecting direction 6B, which intersects with the one direction 6A.

In addition, in generating the synthetic image 83, the synthetic image generation unit 420 arranges the plurality of sound-corresponding images 81 to be in contact with each other as illustrated in the part (B) in Fig. 6.

The mode of the arrangement of the sound-corresponding images 81 is not limited to the mode in which the plurality of sound-corresponding images 81 are in contact with each other. For example, the plurality of sound-corresponding images 81 may partially overlap with each other. Alternatively, a mode in which a gap exists between the plurality of sound-corresponding images 81 may be adopted.

Thereafter, in the present exemplary embodiment, the generated synthetic image 83 illustrated in the part (B) in Fig. 6 is input to the specifying device 400 (see Fig. 2). Therefore, a process of specifying an abnormal sound is performed by the specifying device 400.

Specifically, in the specifying device 400, the synthetic image 83 and an autoencoder are used to perform the process of specifying the abnormal sound.

More specifically, in the specifying device 400, the process of specifying the abnormal sound is performed based on the synthetic image 83 and a difference image obtained based on the output image output through the autoencoder.

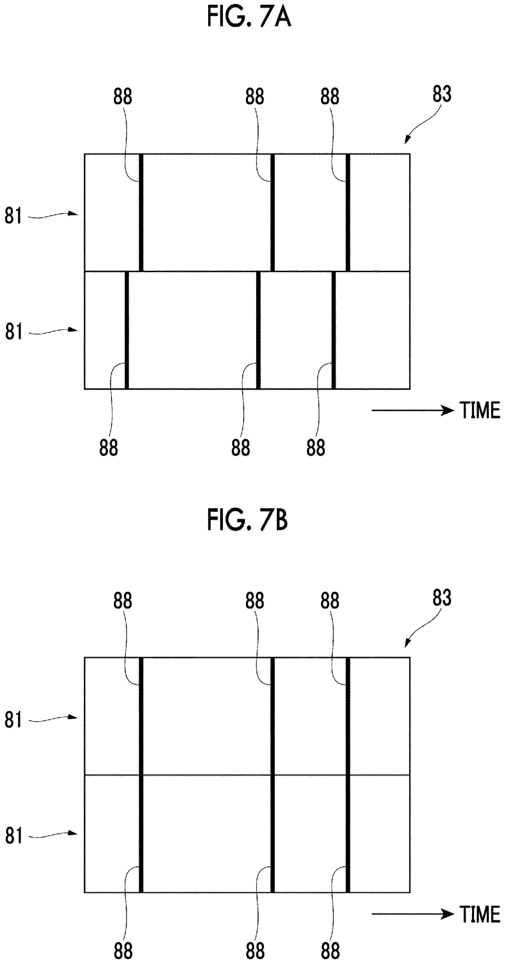

Figs. 7A and 7B are diagrams describing a synchronization between the sound-corresponding images 81.

In Figs. 7A and 7B, each of the sound-corresponding images 81 is displayed in a simplified manner. In addition, in Figs. 7A and 7B, a vertical streak-shaped image 88 caused by an impulse sound generated by the image forming apparatus 100 is included in each of the sound-corresponding images 81.

In generating the synthetic image 83, the synthetic image generation unit 420 generates the synthetic image 83 in which the plurality of sound-corresponding images 81 are arranged in a time-synchronized manner as illustrated in Fig. 7B.

Fig. 7A illustrates a case where the synthetic image 83 is generated in a manner in which the two sound-corresponding images 81 are not synchronized in time.

On the other hand, Fig. 7B illustrates a case where the synthetic image 83 is generated in a manner in which the two sound-corresponding images 81 are synchronized in time.

In the present exemplary embodiment, in some cases, an impulse sound may be generated as a normal sound by the image forming apparatus 100. In some cases, for each transport of the paper P, the paper P abuts against a member on a transport path, and therefore, an impulse sound may be generated as a normal sound.

In Figs. 7A and 7B, the vertical streak-shaped image 88 caused by the impulse sound is included in each of the sound-corresponding images 81.

A case where the two sound-corresponding images 81 are arranged in a time-synchronized manner will be described.

In this case, as illustrated in Fig. 7B, in a case of comparing a position in a time axis direction, the position of the image 88 corresponding to the impulse sound, which appears in one sound-corresponding image 81 coincides with the position of the image 88 corresponding to the impulse sound, which appears in the other sound-corresponding image 81.

Here, as illustrated in Fig. 7A, a case where the two sound-corresponding images 81 are disposed in a manner of not being synchronized in time.

In this case, even though the impulse sound described above is generated at the same timing, the position of the image 88 corresponding to the impulse sound, which appears in one sound-corresponding image 81 and the position of the image 88 corresponding to the impulse sound, which appears in the other sound-corresponding image 81 are shifted from each other.

In this case, there is a concern in that accuracy of specifying an abnormal sound generated by the image forming apparatus 100 may be decreased.

In a case where the sound-corresponding images 81 are disposed in a manner of not being synchronized in time, there is a concern in that the accuracy of specifying the abnormal sound may be decreased due to an interaction between the sound-corresponding images 81.

In a case where the position of the image 88 corresponding to the impulse sound is shifted, there is a concern in that learning by an autoencoder may not be correctly performed due to the interaction between the sound-corresponding images 81. In this case, there is a concern in that the accuracy of specifying the abnormal sound by the specifying device 400 may be decreased.

In a case where the learning by the autoencoder is not performed correctly, a sound, which is originally a normal sound, is specified as an abnormal sound, and the accuracy of specifying the abnormal sound is likely to be decreased.

On the other hand, in the present exemplary embodiment, in the generating of the synthetic image 83, the sound-corresponding images 81 are arranged in a time-synchronized manner. In this case, a defect of a decrease in the accuracy of specifying the abnormal sound is less likely to occur.

Here, in a case where the two sound-corresponding images 81 are not synchronized in time, for example, one sound-corresponding image 81 is offset in the time axis direction. Therefore, the two sound-corresponding images 81 are synchronized in time.

More specifically, for example, a case is assumed in which the two sound-corresponding images 81 are not synchronized in time due to a difference in processing speed in the corresponding image generation unit 410 (see Fig. 2) that generates the sound-corresponding images 81.

In this case, for example, the sound-corresponding image 81 output from the corresponding image generation unit 410 having a faster processing speed is delayed. Therefore, the two sound-corresponding images 81 are synchronized in time.

### [Another Example of Synthesizing Process]

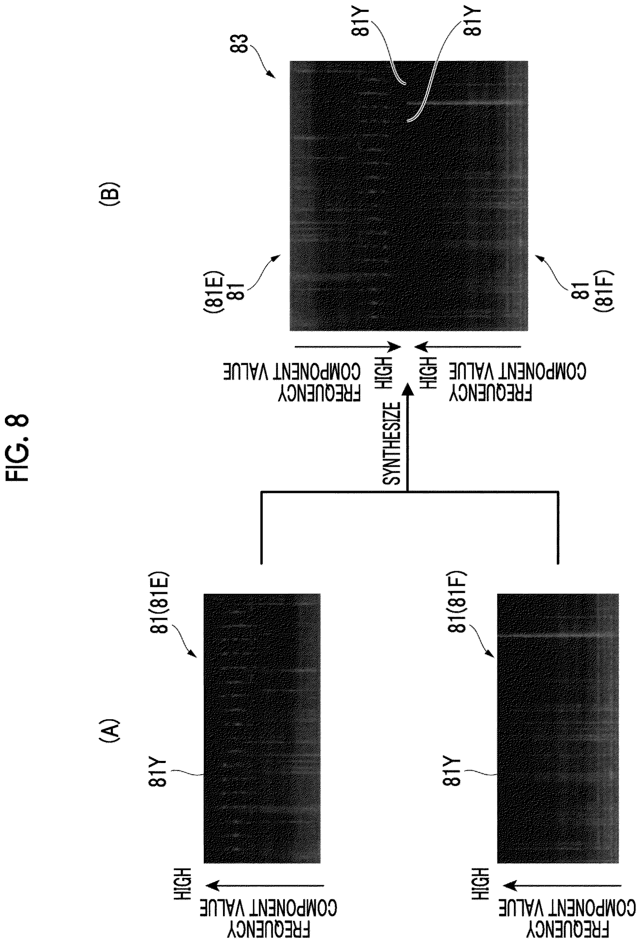

Fig. 8 is a diagram illustrating another example of the process of generating the synthetic image 83.

A part (A) in Fig. 8 illustrates a state before the synthetic image 83 is generated, and a part (B) in Fig. 8 illustrates a state after the synthetic image 83 is generated.

In the example illustrated in Fig. 8, in the generating of the synthetic image 83, the synthetic image generation unit 420 locates the high-frequency side edge 81Y of one sound-corresponding image 81E on another sound-corresponding image 81F side as illustrated in the part (B) in Fig. 8. In addition, the synthetic image generation unit 420 locates the high-frequency side edge 81Y of the other sound-corresponding image 81F on the one sound-corresponding image 81E side.

More specifically, in this example, the synthetic image generation unit 420 generates the synthetic image 83 by reversing the upper and lower sides of the one sound-corresponding image 81E located on an upper side in the part (A) in Fig. 8 and then using the one sound-corresponding image 81E after the reversal and the other sound-corresponding image 81F located on a lower side in the part (A) in Fig. 8 as a basis.

In this example, in this manner, the synthetic image 83 is generated in a manner in which the high-frequency side edge 81Y of the one sound-corresponding image 81E is located on the other sound-corresponding image 81F side, and the high-frequency side edge 81Y of the other sound-corresponding image 81F is located on the one sound-corresponding image 81E side.

In this case, a difference between a density of the one sound-corresponding image 81E and a density of the other sound-corresponding image 81F is less likely to occur at a location at which the one sound-corresponding image 81E and the other sound-corresponding image 81F of the synthetic image 83 are in contact with each other.

As illustrated in the part (B) in Fig. 6, a case is assumed where the low-frequency side edge 81X of the one sound-corresponding image 81E is located on the other sound-corresponding image 81F side, and the high-frequency side edge 81Y of the other sound-corresponding image 81F is located on the one sound-corresponding image 81E side. In this case, the difference between the density of the one sound-corresponding image 81E and the density of the other sound-corresponding image 81F is likely to occur at the location at which the one sound-corresponding image 81E and the other sound-corresponding image 81F are in contact with each other.

On the other hand, in a case where the process illustrated in Fig. 8 is performed, this difference is less likely to occur. In this case, a decrease in accuracy of specifying the abnormal sound is prevented.

A case is assumed in which the difference between the density of the one sound-corresponding image 81E and the density of the other sound-corresponding image 81F is large at the location at which the one sound-corresponding image 81E and the other sound-corresponding image 81F are in contact with each other.

In this case, in the same manner as in a case of the impulse sound described above, there is a concern in that accuracy of specifying an abnormal sound may be decreased due to an interaction between the sound-corresponding images 81. More specifically, in this case, there is a concern in that learning by the autoencoder may not be performed correctly, and accordingly, there is a concern in that the accuracy of specifying the abnormal sound may be decreased.

On the other hand, as illustrated in the part (B) in Fig. 8, in a case where the high-frequency side edge 81Y of the one sound-corresponding image 81E is located on the other sound-corresponding image 81F side and the high-frequency side edge 81Y of the other sound-corresponding image 81F is located on the one sound-corresponding image 81E side, the accuracy of specifying the abnormal sound is less likely to be decreased.

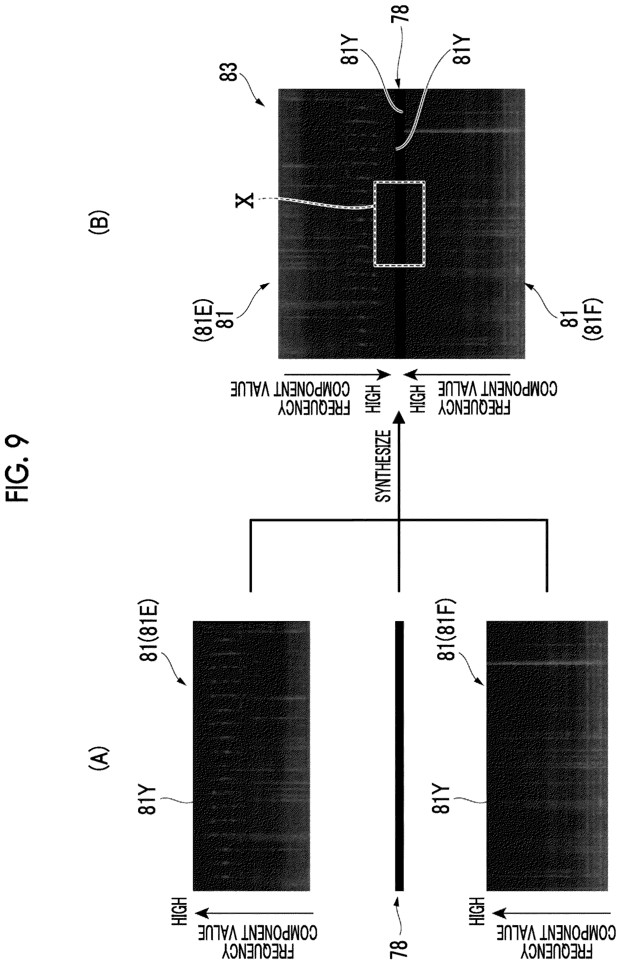

Fig. 9 is a diagram illustrating still another process example.

Apart (A) in Fig. 9 illustrates each of the sound-corresponding images 81 and the like before synthesis, and a part (B) in Fig. 9 illustrates the synthetic image 83.

In this process example as well, in the same manner as the above description, in generating the synthetic image 83, as illustrated in the part (B) in Fig. 9, the high-frequency side edge 81Y of one sound-corresponding image 81E is located on another sound-corresponding image 81F side.

In addition, the high-frequency side edge 81Y of the other sound-corresponding image 81F is located on the one sound-corresponding image 81E side.

Further, in this process example, as illustrated in Fig. 9, the synthetic image generation unit 420 disposes an intermediate image 78 between the one sound-corresponding image 81E and the other sound-corresponding image 81F.

The intermediate image 78 is an image configured with an image other than the one sound-corresponding image 81E and the other sound-corresponding image 81F.

In this process example, the intermediate image 78 is disposed to further reduce a density difference at a boundary between the one sound-corresponding image 81E and the other sound-corresponding image 81F. Here, a density of the intermediate image 78 is uniform.

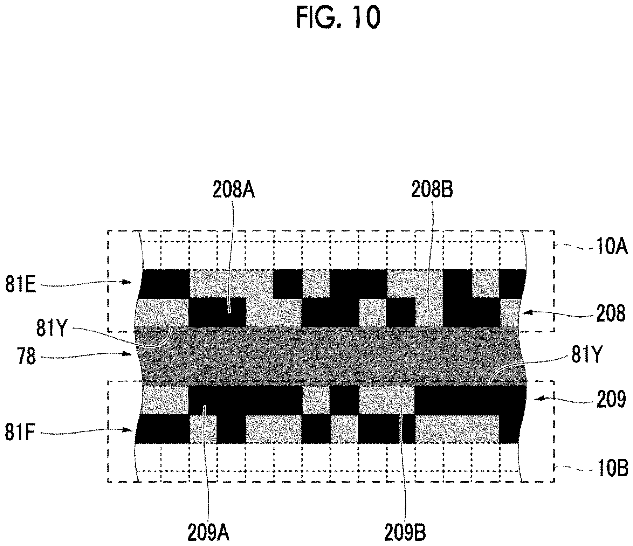

Fig. 10 is an enlarged view of a portion indicated by a reference numeral X in Fig. 9.

In Fig. 10, the intermediate image 78, a part of one sound-corresponding image 81E, and a part of another sound-corresponding image 81F are displayed.

Here, a plurality of pixels 208 constituting the one sound-corresponding image 81E are considered. The plurality of pixels 208 are a plurality of pixels arranged in the one direction 6A (see the part (B) in Fig. 6), and are a plurality of pixels in contact with the intermediate image 78.

In the present exemplary embodiment, a density value of the intermediate image 78 is smaller than a density value of a pixel 208A, which has the largest density value among the plurality of pixels 208. Further, in the present exemplary embodiment, the density value of the intermediate image 78 is larger than a density value of a pixel 208B having the smallest density value among the plurality of pixels 208.

The plurality of pixels 208 includes a pixel having a large density value and a pixel having a small density value.

In the present exemplary embodiment, a density value of the intermediate image 78 is smaller than a density value of the pixel 208A, which has the largest density value among the plurality of pixels 208. Further, the density value of the intermediate image 78 is larger than the density value of the pixel 208B having the smallest density value among the plurality of pixels 208.

In this case, a density at a boundary between the one sound-corresponding image 81E and the other sound-corresponding image 81F is less, as compared with a case where the one sound-corresponding image 81E and the other sound-corresponding image 81F are in direct contact with each other.

In a case where the one sound-corresponding image 81E and the other sound-corresponding image 81F are in direct contact with each other, a situation occurs in which a pixel having a large density value included in the one sound-corresponding image 81E and a pixel having a small density value included in the other sound-corresponding image 81F are adjacent to each other.

In this case, the density at the boundary between the one sound-corresponding image 81E and the other sound-corresponding image 81F is increased, and thus accuracy of specifying an abnormal sound may be decreased.

On the other hand, in a case where the intermediate image 78 is provided, an increase in density is prevented. In this case, the accuracy of specifying the abnormal sound is less likely to be decreased.

In the present exemplary embodiment, the other sound-corresponding image 81F side also has the same configuration.

Here, a plurality of pixels 209 constituting the other sound-corresponding image 81F is assumed. Specifically, a plurality of pixels arranged in the one direction 6A (see the part (B) in Fig. 6) are assumed to be the plurality of pixels 209 in contact with the intermediate image 78.

In the present exemplary embodiment, a density value of the intermediate image 78 is smaller than a density value of a pixel 209A, which has the largest density value among the plurality of pixels 209. Further, the density value of the intermediate image 78 is larger than a density value of a pixel 209B having the smallest density value among the plurality of pixels 209.

For example, the density of the intermediate image 78 is set in advance based on the density of the one sound-corresponding image 81E in the past, which is already obtained, and the density of the other sound-corresponding image 81F in the past, which is already obtained.

Specifically, the density of the intermediate image 78 is set based on, for example, a first average value which is an average value of the densities of each of the plurality of pixels 208 described above of the one sound-corresponding image 81E and a second average value which is an average value of the densities of each of the plurality of pixels 209 described above of the other sound-corresponding image 81F.

More specifically, for example, an average value of the first average value and the second average value is set as the density of the intermediate image 78.

Alternatively, for example, the density of the intermediate image 78 may be set based on a first average value, which is an average value of the respective densities of pixels included in a specific region indicated by a reference numeral 10A in Fig. 10, among the pixels constituting the one sound-corresponding image 81E, and a second average value, which is an average value of the respective densities of pixels included in a specific region indicated by a reference numeral 10B among the pixels constituting the other sound-corresponding image 81F.

More specifically, in this case, an average value of the first average value and the second average value may be further obtained, and the obtained average value may be set as the density of the intermediate image 78.

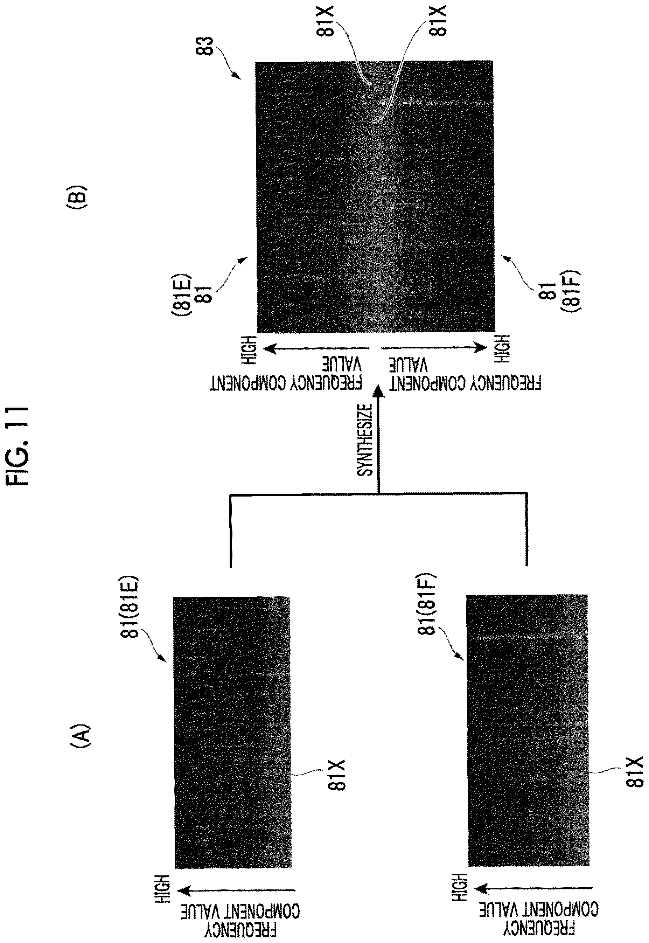

Fig. 11 is a diagram illustrating still another example of the process of generating the synthetic image 83.

A part (A) in Fig. 11 illustrates a state before the synthetic image 83 is generated, and a part (B) in Fig. 11 illustrates a state after the synthetic image 83 is generated.

In the example illustrated in Fig. 11, in the generating of the synthetic image 83, the synthetic image generation unit 420 locates the low-frequency side edge 81X of one sound-corresponding image 81E on another sound-corresponding image 81F side as illustrated in the part (B) in Fig. 11. In addition, as illustrated in the part (B) in Fig. 11, the synthetic image generation unit 420 locates the low-frequency side edge 81X of the other sound-corresponding image 81F on the one sound-corresponding image 81E side.

More specifically, the synthetic image generation unit 420 reverses the upper and lower sides of the other sound-corresponding image 81F located on a lower side in the part (A) in Fig. 11. The synthetic image generation unit 420 generates the synthetic image 83 based on the other sound-corresponding image 81F after the reversing of the upper and lower sides and the one sound-corresponding image 81E located on an upper side in Fig. 11.

In this example, the synthetic image 83 is generated in a manner in which the low-frequency side edge 81X of the one sound-corresponding image 81E is located on the other sound-corresponding image 81F side, and the low-frequency side edge 81X of the other sound-corresponding image 81F is located on the one sound-corresponding image 81E side.

In this case as well, a difference between a density of the one sound-corresponding image 81E and a density of the other sound-corresponding image 81F is less likely to occur at a location at which the one sound-corresponding image 81E and the other sound-corresponding image 81F are in contact with each other.

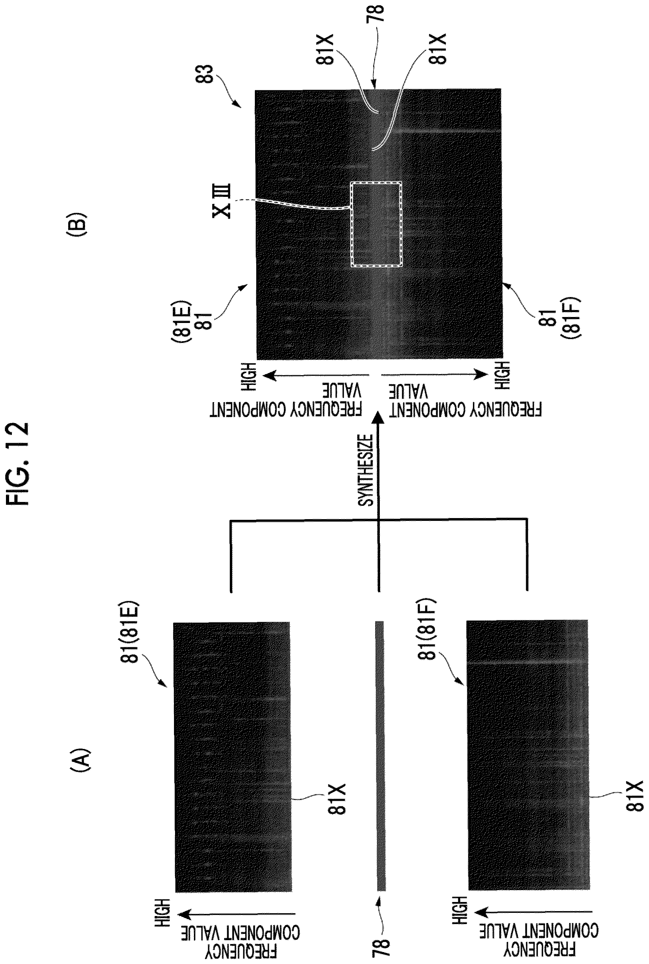

Fig. 12 is a diagram illustrating still another process example.

Apart (A) in Fig. 12 illustrates each of the sound-corresponding images 81 and the like before synthesis, and a part (B) in Fig. 12 illustrates the synthetic image 83 obtained by the synthesis.

In this process example as well, in generating the synthetic image 83, as illustrated in the part (B) in Fig. 12, the low-frequency side edge 81X of one sound-corresponding image 81E is located on another sound-corresponding image 81F side. In addition, the low-frequency side edge 81X of the other sound-corresponding image 81F is located on the one sound-corresponding image 81E side.

Further, in this process example, in generating the synthetic image 83, the synthetic image generation unit 420 disposes the intermediate image 78 between the one sound-corresponding image 81E and the other sound-corresponding image 81F, as described above.

In this process example as well, a density at a boundary between the one sound-corresponding image 81E and the other sound-corresponding image 81F is reduced by the intermediate image 78. Here, a density of the intermediate image 78 is uniform, as described above.

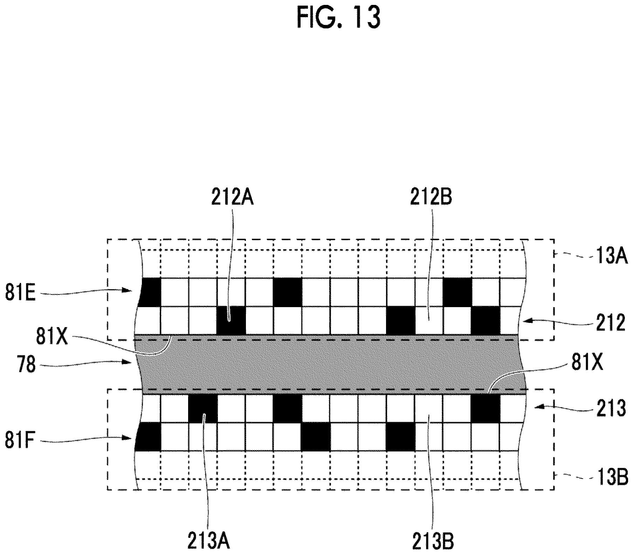

Fig. 13 is an enlarged view of a portion indicated by a reference numeral XIII in Fig. 12.

In Fig. 13 as well, the intermediate image 78, a part of one sound-corresponding image 81E, and a part of another sound-corresponding image 81F are displayed.

Here, a plurality of pixels 212 constituting the one sound-corresponding image 81E is also considered. The plurality of pixels 212 are a plurality of pixels arranged in the one direction 6A (see the part (B) in Fig. 6) described above, and are a plurality of pixels in contact with the intermediate image 78, as described above.

In the present exemplary embodiment, a density value of the intermediate image 78 is smaller than a density value of a pixel 212A, which has the largest density value among the plurality of pixels 212. Further, in the present exemplary embodiment, the density value of the intermediate image 78 is larger than a density value of a pixel 212B having the smallest density value among the plurality of pixels 212.

In the same manner as the above description, the plurality of pixels 212 includes a pixel having a large density value and a pixel having a small density value.

In the present exemplary embodiment, a density value of the intermediate image 78 is smaller than the density value of the pixel 212A, which has the largest density value among the plurality of pixels 212.

In addition, in the present exemplary embodiment, the density value of the intermediate image 78 is larger than the density value of the pixel 212B having the smallest density value among the plurality of pixels 212.

In this case, in the same manner as the above description, a density at a boundary between the one sound-corresponding image 81E and the other sound-corresponding image 81F is less, as compared with a case where the one sound-corresponding image 81E and the other sound-corresponding image 81F are in direct contact with each other.

The same applies to the other sound-corresponding images 81F side.

Here, a plurality of pixels 213 constituting the other sound-corresponding image 81F are assumed. Specifically, a plurality of pixels arranged in the one direction 6A (see Fig. the part (B) in 6) are assumed as the plurality of pixels 213 in contact with the intermediate image 78.

In the present exemplary embodiment, a density value of the intermediate image 78 is smaller than a density value of a pixel 213A, which has the largest density value among the plurality of pixels 213. In addition, in the present exemplary embodiment, the density value of the intermediate image 78 is larger than a density value of a pixel 213B having the smallest density value among the plurality of pixels 213.

In the same manner as the above description, for example, the density of the intermediate image 78 is set in advance based on the density of the one sound-corresponding image 81E in the past, which is already obtained, and the density of the other sound-corresponding image 81F in the past, which is already obtained.

Specifically, the density of the intermediate image 78 is set based on, for example, a first average value which is an average value of the densities of each of the plurality of pixels 212 described above of the one sound-corresponding image 81E and a second average value which is an average value of the densities of each of the plurality of pixels 213 described above of the other sound-corresponding image 81F.

More specifically, for example, an average value of the first average value and the second average value is set as the density of the intermediate image 78.

Alternatively, for example, the density of the intermediate image 78 may be set based on a first average value, which is an average value of the respective densities of pixels included in a specific region indicated by a reference numeral 13A among the pixels constituting the one sound-corresponding image 81E, and a second average value, which is an average value of the respective densities of pixels included in a specific region indicated by a reference numeral 13B among the pixels constituting the other sound-corresponding image 81F.

More specifically, in this case, an average value of the first average value and the second average value may be further obtained, and the obtained average value may be set as the density of the intermediate image 78.

Although not illustrated, in the synthetic image 83 illustrated in Fig. 6, the intermediate image 78 may be disposed between the one sound-corresponding image 81E and the other sound-corresponding image 81F constituting the synthetic image 83.

In the example illustrated in Fig. 6, for example, in a case of disposing the intermediate image 78, the density of the intermediate image 78 is desired to be gradually increased from the one sound-corresponding image 81E side to the other sound-corresponding image 81F side.

In the example illustrated in Fig. 6, the low-frequency side edge 81X of one sound-corresponding image 81E is located in the other sound-corresponding image 81F side, and the high-frequency side edge 81Y of the other sound-corresponding image 81F is located on the one sound-corresponding image 81E side.

For example, in this case, the density of the intermediate image 78 is desired to be gradually increased from the one sound-corresponding image 81E side to the other sound-corresponding image 81F side.

In addition, in the above description, the synthetic image 83 is generated based on the two sound-corresponding images 81, and the present exemplary embodiment is not limited to this.

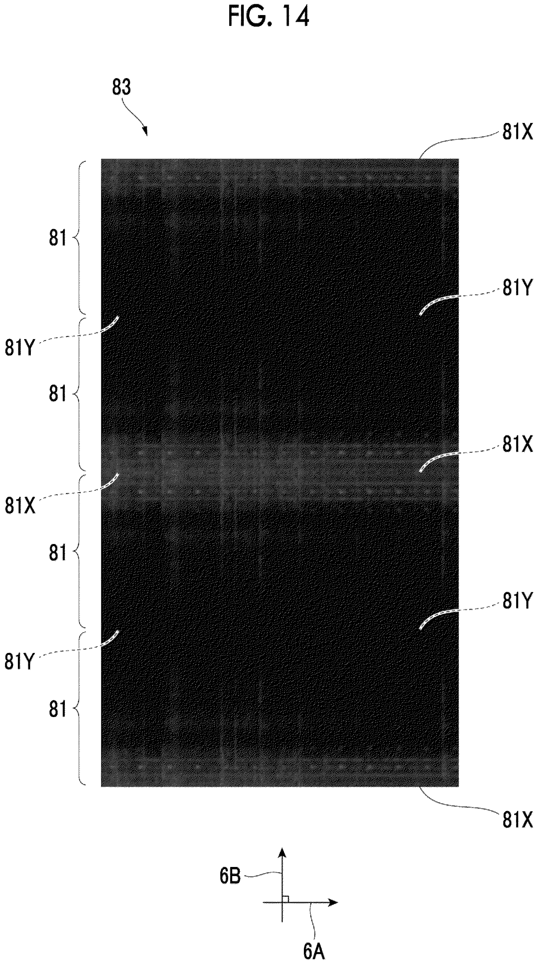

For example, as illustrated in Fig. 14 (diagram illustrating still another example of the synthetic image), the synthetic image 83 may be generated based on three or more sound-corresponding images 81.

In the example illustrated in Fig. 14, a case where one synthetic image 83 is formed based on the four sound-corresponding images 81 generated in accordance with the four sound sensors 120 is illustrated.

In this example illustrated in Fig. 14 as well, in the same manner as the above description, between the two sound-corresponding images 81 adjacent to each other in the intersecting direction 6B, which is a direction intersecting with the one direction 6A, the low-frequency side edges 81X are in contact with each other, or the high-frequency side edges 81Y are in contact with each other.

In addition, in this example illustrated in Fig. 14 as well, in the same manner as the exemplary embodiments illustrated in Figs. 9 and 12, the intermediate image 78 may be disposed between the two sound-corresponding images 81 adjacent to each other.

### (Supplementary Note)

(((1))) An image forming apparatus comprising:
   an image forming unit that forms an image on a recording medium;
   a plurality of sound detection units that detect a sound of the image forming unit; and
   a specifying unit that specifies an abnormality of the image forming unit based on information output from the plurality of sound detection units,
   wherein the specifying unit is provided in a number less than the number of plurality of sound detection units.
(((2))) The image forming apparatus according to (((1))), further comprising:
   a transmission section that transmits information indicating that the abnormality occurs to an external apparatus in a case where the abnormality is specified by the specifying unit.
(((3))) The image forming apparatus according to (((1))) or (((2))),
   wherein the specifying unit performs machine learning by using an image that is generated based on the information obtained by the sound detection unit and is generated for each sound detection unit, calculates a latent variable from a feature amount extracted from the image by using an abnormality detection model after the machine learning, generates an output image by restoring the image by using the latent variable, and specifies the abnormality of the image forming unit by comparing an input image with the output image.
(((4))) The image forming apparatus according to any one of (((1))) to (((3))), further comprising:
   a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis,
   wherein the specifying unit specifies the abnormality based on the synthetic image generated by the generation section.
(((5))) The image forming apparatus according to (((4))),
   wherein each of the images generated by each of the sound detection units is an image which has a time axis and a frequency axis and in which an intensity of a sound is represented by a pixel value, and
   the generation section generates the synthetic image in which each of the images is arranged in a manner in which the time axis of each of the plurality of images extends along specific one direction.
(((6))) The image forming apparatus according to (((5))),
   wherein in a case of generating the synthetic image by synthesizing the images based on the plurality of images, the generation section generates the synthetic image in which each of the images is arranged in a manner in which the time axis of each of the plurality of images extends along the one direction and in a manner in which the plurality of images are arranged in a direction intersecting with the one direction.
(((7))) The image forming apparatus according to (((5))),
   wherein in a case of generating the synthetic image by synthesizing the images based on the plurality of images, the generation section generates the synthetic image in which the plurality of images are arranged in a time-synchronized manner.
(((8))) The image forming apparatus according to (((6))),
   wherein the frequency axis of the image corresponds to a magnitude of a frequency component value obtained by analyzing the information obtained by the sound detection unit,
   each of the images has a first side along a direction in which the time axis extends and a second side which is along the direction in which the time axis extends and has a position different from the first side in a direction in which the frequency axis extends,
   one side of the first side and the second side is a low-frequency side edge located on a low-frequency side and is disposed on a side in the image at which a low-frequency component value is displayed, and the other side of the first side and the second side is a high-frequency side edge located on a high-frequency side and is disposed on a side in the image at which a high-frequency component value is displayed, and
   in a case of generating the synthetic image by synthesizing the images by using at least one image and another image included in the plurality of images, the generation section generates a synthetic image in which the high-frequency side edge of the one image is located on the other image side and the high-frequency side edge of the other image is located on the one image side.
(((9))) The image forming apparatus according to (((8))),
   wherein in a case of generating the synthetic image by synthesizing the images by using at least the one image and the other image, the generation section disposes an intermediate image, which is an image other than the one image and the other image, between the one image and the other image.
(((10))) The image forming apparatus according to (((9))),
   wherein among a plurality of pixels constituting the one image, a density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction, and
   among a plurality of pixels constituting the other image, the density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction.
(((11))) The image forming apparatus according to (((6))),
   wherein the frequency axis of the image corresponds to a magnitude of a frequency component value obtained by analyzing the information obtained by the sound detection unit,
   each of the images has a first side along a direction in which the time axis extends and a second side which is along the direction in which the time axis extends and has a position different from the first side in a direction in which the frequency axis extends,
   one side of the first side and the second side is a low-frequency side edge located on a low-frequency side and is disposed on a side in the image at which a low-frequency component value is displayed, and the other side of the first side and the second side is a high-frequency side edge located on a high-frequency side and is disposed on a side in the image at which a high-frequency component value is displayed, and
   in a case of generating the synthetic image by synthesizing the images by using at least one image and another image included in the plurality of images, the generation section generates a synthetic image in which the low-frequency side edge of the one image is located on the other image side and the low-frequency side edge of the other image is located on the one image side.
(((12))) The image forming apparatus according to (((11))),
   wherein in a case of generating the synthetic image by synthesizing the images by using at least the one image and the other image, the generation section disposes an intermediate image, which is an image other than the one image and the other image, between the one image and the other image.
(((13))) The image forming apparatus according to (((12))),
   wherein among a plurality of pixels constituting the one image, a density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction, and
   among a plurality of pixels constituting the other image, the density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction.
(((14))) An image forming apparatus comprising:
   an image forming unit that forms an image on a recording medium;
   a plurality of sound detection units that detect a sound of the image forming unit;
   a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis; and
   a specifying unit that specifies an abnormality of the image forming unit based on the synthetic image.

With the image forming apparatus according to (((1))), it is possible to reduce hardware required for specifying an abnormality, as compared with a case where a function unit for specifying the abnormality is individually provided in a manner corresponding to each of a plurality of sound detection units.

With the image forming apparatus according to (((2))), it is possible to reduce the amount of information on the abnormality transmitted to an external apparatus, as compared with a case where the information is transmitted to the external apparatus regardless of the presence or absence of the specified abnormality.

With the image forming apparatus according to (((3))), even in a situation in which only a normal sound is basically generated and the abnormal sound is less likely to be generated in the image forming apparatus, it is possible to specify the abnormality generated in the image forming apparatus.

With the image forming apparatus according to (((4))), it is possible to reduce a load of a process required for specifying the abnormality, as compared with a case where the abnormality is specified for each image obtained for each sound detection unit.

With the image forming apparatus according to (((5))), it is possible to increase accuracy of specifying the abnormality, as compared with a case where a direction in which a time axis of one image included in a plurality of images extends and a direction in which a time axis of another image extends are different from each other.

With the image forming apparatus according to (((6))), it is possible to increase the accuracy of specifying the abnormality, as compared with a case where the direction in which the time axis of the one image included in the plurality of images extends and the direction in which the time axis of the other image extends are different from each other.

With the image forming apparatus according to (((7))), it is possible to increase the accuracy of specifying the abnormality, as compared with a case where the plurality of images are not arranged in a time-synchronized manner.

With the image forming apparatus according to (((8))), it is possible to increase the accuracy of specifying the abnormality, as compared with a case where a low-frequency side edge of the one image is located on the other image side and a high-frequency side edge of the other image is located on the one image side.

With the image forming apparatus according to (((9))), it is possible to increase the accuracy of specifying the abnormality, as compared with a case where the one image and the other image are in direct contact with each other.

With the image forming apparatus according to (((10))), it is possible to increase the accuracy of specifying the abnormality, as compared with a case where the one image and the other image are in direct contact with each other.

With the image forming apparatus according to (((11))), it is possible to increase the accuracy of specifying the abnormality, as compared with a case where the low-frequency side edge of the one image is located on the other image side and the high-frequency side edge of the other image is located on the one image side.

With the image forming apparatus according to ((12)), it is possible to increase the accuracy of specifying the abnormality, as compared with a case where the one image and the other image are in direct contact with each other.

With the image forming apparatus according to ((13)), it is possible to increase the accuracy of specifying the abnormality, as compared with a case where the one image and the other image are in direct contact with each other.

With the image forming apparatus according to (((14))), it is possible to reduce the hardware required for specifying the abnormality, as compared with a case where the abnormality is specified without generating the synthetic image.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

78: intermediate image
81A: horizontal axis
81B: vertical axis
81E: one sound-corresponding image
81F: another sound-corresponding image
81X: low-frequency side edge
81Y: high-frequency side edge
83: synthetic image
100: image forming apparatus
100A: image forming unit
120: sound sensor
200: server apparatus
400: specifying device
420: synthetic image generation unit
430: transmission unit

## Claims

1. An image forming apparatus comprising:
an image forming unit that forms an image on a recording medium;
a plurality of sound detection units that detect a sound of the image forming unit; and
a specifying unit that specifies an abnormality of the image forming unit based on information output from the plurality of sound detection units,
wherein the specifying unit is provided in a number less than the number of plurality of sound detection units.

2. The image forming apparatus according to claim 1, further comprising:
a transmission section that transmits information indicating that the abnormality occurs to an external apparatus in a case where the abnormality is specified by the specifying unit.

3. The image forming apparatus according to claim 1 or 2,
wherein the specifying unit performs machine learning by using an image that is generated based on the information obtained by the sound detection unit and is generated for each sound detection unit, calculates a latent variable from a feature amount extracted from the image by using an abnormality detection model after the machine learning, generates an output image by restoring the image by using the latent variable, and specifies the abnormality of the image forming unit by comparing an input image with the output image.

4. The image forming apparatus according to any one of claims 1 to 3, further comprising:
a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis,
wherein the specifying unit specifies the abnormality based on the synthetic image generated by the generation section.

5. The image forming apparatus according to claim 4,
wherein each of the images generated by each of the sound detection units is an image which has a time axis and a frequency axis and in which an intensity of a sound is represented by a pixel value, and
the generation section generates the synthetic image in which each of the images is arranged in a manner in which the time axis of each of the plurality of images extends along specific one direction.

6. The image forming apparatus according to claim 5,
wherein in a case of generating the synthetic image by synthesizing the images based on the plurality of images, the generation section generates the synthetic image in which each of the images is arranged in a manner in which the time axis of each of the plurality of images extends along the one direction and in a manner in which the plurality of images are arranged in a direction intersecting with the one direction.

7. The image forming apparatus according to claim 5,
wherein in a case of generating the synthetic image by synthesizing the images based on the plurality of images, the generation section generates the synthetic image in which the plurality of images are arranged in a time-synchronized manner.

8. The image forming apparatus according to claim 6,
wherein the frequency axis of the image corresponds to a magnitude of a frequency component value obtained by analyzing the information obtained by the sound detection unit,
each of the images has a first side along a direction in which the time axis extends and a second side which is along the direction in which the time axis extends and has a position different from the first side in a direction in which the frequency axis extends,
one side of the first side and the second side is a low-frequency side edge located on a low-frequency side and is disposed on a side in the image at which a low-frequency component value is displayed, and the other side of the first side and the second side is a high-frequency side edge located on a high-frequency side and is disposed on a side in the image at which a high-frequency component value is displayed, and
in a case of generating the synthetic image by synthesizing the images by using at least one image and another image included in the plurality of images, the generation section generates a synthetic image in which the high-frequency side edge of the one image is located on the other image side and the high-frequency side edge of the other image is located on the one image side.

9. The image forming apparatus according to claim 8,
wherein in a case of generating the synthetic image by synthesizing the images by using at least the one image and the other image, the generation section disposes an intermediate image, which is an image other than the one image and the other image, between the one image and the other image.

10. The image forming apparatus according to claim 9,
wherein among a plurality of pixels constituting the one image, a density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction, and
among a plurality of pixels constituting the other image, the density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction.

11. The image forming apparatus according to claim 6,
wherein the frequency axis of the image corresponds to a magnitude of a frequency component value obtained by analyzing the information obtained by the sound detection unit,
each of the images has a first side along a direction in which the time axis extends and a second side which is along the direction in which the time axis extends and has a position different from the first side in a direction in which the frequency axis extends,
one side of the first side and the second side is a low-frequency side edge located on a low-frequency side and is disposed on a side in the image at which a low-frequency component value is displayed, and the other side of the first side and the second side is a high-frequency side edge located on a high-frequency side and is disposed on a side in the image at which a high-frequency component value is displayed, and
in a case of generating the synthetic image by synthesizing the images by using at least one image and another image included in the plurality of images, the generation section generates a synthetic image in which the low-frequency side edge of the one image is located on the other image side and the low-frequency side edge of the other image is located on the one image side.

12. The image forming apparatus according to claim 11,
wherein in a case of generating the synthetic image by synthesizing the images by using at least the one image and the other image, the generation section disposes an intermediate image, which is an image other than the one image and the other image, between the one image and the other image.

13. The image forming apparatus according to claim 12,
wherein among a plurality of pixels constituting the one image, a density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction, and
among a plurality of pixels constituting the other image, the density value of the intermediate image is smaller than a density value of a pixel having a largest density value among a plurality of pixels which are arranged in the one direction and which are in contact with the intermediate image, and the density value of the intermediate image is larger than a density value of a pixel having a smallest density value among the plurality of pixels arranged in the one direction.

14. An image forming apparatus comprising:
an image forming unit that forms an image on a recording medium;
a plurality of sound detection units that detect a sound of the image forming unit;
a generation section that generates, by synthesizing images based on a plurality of images generated according to the plurality of sound detection units, which is an image generated based on the information obtained by the sound detection unit and is generated for each sound detection unit, a synthetic image that is an image obtained by the synthesis; and
a specifying unit that specifies an abnormality of the image forming unit based on the synthetic image.
